# EUROPEAN PATENT APPLICATION

(11) **EP 4 472 120 A1**
(43) Date of publication of application: **04.12.2024**
(21) Application number: 23746184.3
(22) Date of filing: 18.01.2023
(51) Int. Cl.: H04L 5/00

(54) **METHOD AND APPARATUS FOR DETERMINING EFFECTIVE DURATION OF REFERENCE SIGNAL, AND TERMINAL**

(30) Priority: 25.01.2022 CN 202210089072
(71) Applicant: VIVO MOBILE COMMUNICATION CO., LTD., Dongguan, Guangdong 523863 (CN)
(72) Inventor: WANG, Yangyang, Dongguan, Guangdong 523863 (CN); CHEN, Li, Dongguan, Guangdong 523863 (CN)
(74) Representative: Lavoix
(86) International application number: PCT/CN2023/072876
(87) International publication number: WO 2023/143303

(57) **Abstract**

This application discloses a method and an apparatus for determining a validity duration of a reference signal and a terminal and pertains to the field of communications technologies. The method for determining a validity duration of a reference signal in embodiments of this application includes: obtaining, by a terminal, first information in an idle state or an inactive state; and determining, by the terminal, a target validity duration of a first reference signal based on the first information, or determining, based on second availability indication information, that the first reference signal is unavailable, where the first reference signal includes a tracking reference signal and/or a channel state information reference signal; where the first information includes at least one of the following: a system information message, first availability indication information, and second availability indication information.

## Description

### CROSS-REFERENCE TO RELATED APPLICATIONS

This application claims priority to Chinese Patent Application No. 202210089072.2, filed in China on January 25, 2022, which is incorporated herein by reference in its entirety.

### TECHNICAL FIELD

This application pertains to the field of communications technologies, and specifically, relates to a method and an apparatus for determining validity duration of reference signal, and a terminal.

### BACKGROUND

In the related art, a tracking reference signal (TRS) and/or channel state information-reference signal (CSI-RS) of a terminal in a connected state can be shared with a terminal in an idle (idle) state and/or inactive (inactive) state, so that the terminal in the idle state and/or inactive state can use the TRS and/or CSI-RS for synchronization and automatic gain control adjustment.

After the terminal receives availability indication information of the idle and/or inactive TRS and/or CSI-RS, the idle and/or inactive TRS is available for a period of time. However, during this period, a system information block containing the idle and/or inactive TRS and/or CSI-RS may be changed, and a behavior of the terminal is not clear at that time.

### SUMMARY

Embodiments of this application provide a method and an apparatus for determining validity duration of reference signal, and a terminal, so as to determine a validity duration of a first reference signal or availability of the first reference signal.

According to a first aspect, a method for determining a validity duration of a reference signal is provided, including:
obtaining, by a terminal, first information in an idle state or an inactive state; and
determining, by the terminal, a target validity duration of a first reference signal based on the first information, or determining, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

According to a second aspect, an apparatus for determining a validity duration of a reference signal is provided, including:
an obtaining module, configured to obtain first information in an idle state or an inactive state; and
a processing module, configured to determine a target validity duration of a first reference signal based on the first information, or determine, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

According to a third aspect, a terminal is provided, where the terminal includes a processor and a memory, and a program or instructions capable of running on the processor are stored in the memory. When the program or instructions are executed by the processor, the steps of the method according to the first aspect are implemented.

According to a fourth aspect, a terminal is provided, including a processor and a communication interface, where the processor is configured to obtain first information in an idle state or an inactive state; and determine a target validity duration of a first reference signal based on the first information, or determine, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

According to a fifth aspect, a readable storage medium is provided, where a program or instructions are stored in the readable storage medium, and when the program or instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program product is provided, where the computer program product is stored in a storage medium, and the computer program product is executed by at least one processor to implement the steps of the method for determining a validity duration of a reference signal according to the first aspect.

In the embodiments of this application, the terminal in the idle state or the inactive state determines the validity duration of the idle and/or inactive first reference signal based on the first information, and can then monitor the first reference signal during the validity duration of the first reference signal. In this way, the behavior of the terminal can be clarified even if the configuration information of the first reference signal is changed after the terminal receives availability indication information of the first reference signal.

### BRIEF DESCRIPTION OF DRAWINGS

FIG. 1 is a block diagram of a wireless communication system to which the embodiments of this application are applicable;
FIGs. 2 to 5 are schematic diagrams of a method for determining a validity duration of a reference signal according to an embodiment of this application;
FIG. 6 is a schematic structural diagram of a method for determining a validity duration of a reference signal according to an embodiment of this application;
FIG. 7 is a schematic structural diagram of a communication device according to an embodiment of this application; and
FIG. 8 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communications system.

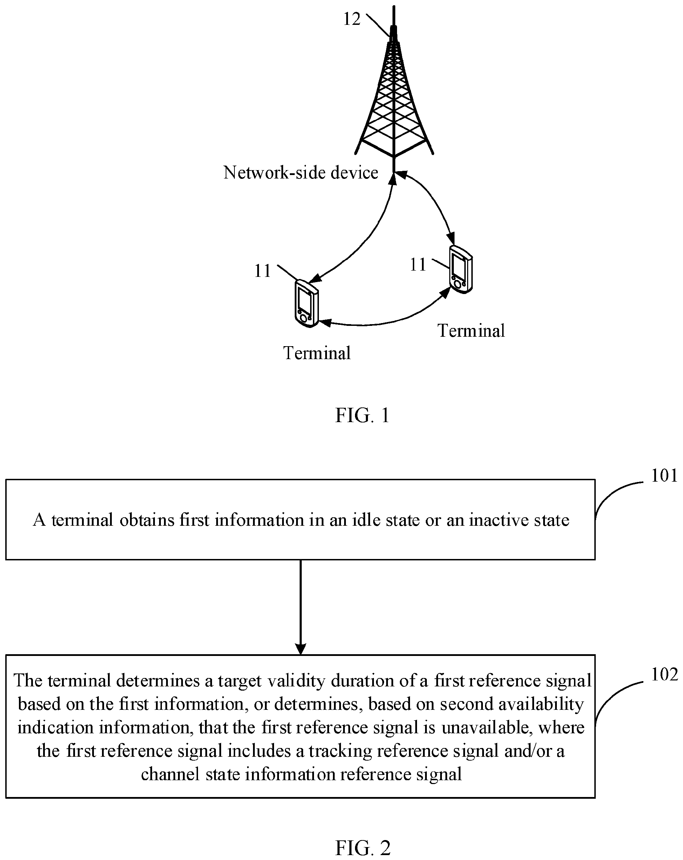

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmit/receive (Transmit/Receive Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

UE working in an idle (idle)/inactive (inactive) state needs to perform automatic gain control (AGC), time-frequency synchronization, and the like before receiving paging (paging), so as to ensure that paging physical downlink control channel (PDCCH)/physical downlink shared channel (PDSCH) can be correctly received. In NR, a synchronization signal block (SSB) is used for implementing AGC and time-frequency synchronization in an idle/inactive state. However, generally, a transmission period of the SSB is relatively long (for example, 20ms), because the UE needs to wake up earlier before receiving the paging and the UE may need to receive a plurality of SSBs for implementing synchronization and AGC. In this way, receiving SSB consumes relatively large energy.

In related technologies, channel state information (CSI)-reference signal (RS) can be used for synchronization, CSI measurement, radio resource management (RRM) measurement, radio link monitoring, beam failure detection, beam management, AGC, and the like in a connected state, but UE in an idle/inactive (idle/inactive) state cannot use CSI-RS for implementing such functions. Therefore, to reduce power consumption, the tracking reference signal (TRS)/CSI-RS is introduced for the radio resource control (RRC) idle/inactive state to assist in measurement, so as to reduce power consumption and implement energy saving.

Because one TRS is composed of four CSI-RS resources and a bandwidth of TRS configuration is larger, the TRS in use can implement better time-frequency tracking than the SSB. When a TRS for idle/inactive state is available, the UE can skip a plurality of SSBs if using the TRS for synchronization before receiving paging in a case of a low signal-to-noise ratio. Assuming that a TRS for idle/inactive state is unavailable, the UE needs to use three SSBs for AGC, synchronization, RRM measurement, and the like before a paging occasion (PO), and the UE needs to wake up more than 40ms in advance. When a TRS for idle/inactive state is available, it is assumed that UE requires only one TRS and one SSB to implement AGC and synchronization before receiving paging, and generally, TRSs are configured denser than SSBs, and the UE needs to wake up less than 40ms in advance, thus bringing energy-saving gains.

In related technologies, one system information block (SIB) is introduced to carry a configuration of idle/inactive TRS/CSI-RS occasion(s), where configuration information of TRS/CSI-RS occasion(s) contains one or more TRS resource sets, and each TRS resource set contains a group of TRS resources.

With regard to availability for idle/inactive UE, it has been agreed to support paging PDCCH based availability indication information and PEI based availability indication information. For paging PDCCH based L1 availability indication, when availability indication information is received, availability takes effect for a period of time starting from a reference point, where this period of time is called validity duration (validity duration), and a time length of the validity duration is optionally configured by the higher layer. The reference point at which the validity duration begins is a system frame number (SFN) of the 1st paging frame (PF) of a default discontinuous reception cycle (DRX cycle) for receiving the availability indication information by the UE. In addition, the time length of the validity duration uses a default paging cycle (default paging cycle) as a time unit, and available values are {1, 2, 4, 8, 16, 32, [64], [128], [256], [512]}. In a case that the higher layer configures no time length of the validity duration, the UE assumes that the time length of the validity duration is two default paging cycles.

Modification period (modification period) is used to update SI messages other than SI messages related to earthquake and tsunami warning system (ETWS), commercial mobile alert system (CMAS), and positioning assistance data, and is applied to UEs configured with DRX cycle. In one modification period, if a SI message is changed, the network side may add SI change indication information to paging of a current modification period, and broadcast updated system information in a next modification period.

A boundary is calculated in the following manner:
SFN mod m=0, where m is the number of radio frames forming a modification period, and is configured by using system information.

After the UE receives an idle/inactive TRS/CSI-RS availability indication, the UE considers that an idle/inactive TRS/CSI-RS keeps valid for a validity duration starting from the reference point. However, in one scenario, during the validity duration, configuration information carrying idle/inactive TRS/CSI-RS occasion(s) or a time length of the validity duration may change. When this happens, it is still not clear how the UE handles validity of an idle/inactive TRS/CSI-RS.

The embodiments of this application provide a method and an apparatus for determining validity duration of reference signal, and a terminal, so as to determine a validity duration of a first reference signal or monitor the first reference signal during the validity duration.

The following describes in detail a method for determining a validity duration of a reference signal provided in the embodiments of this application by using some embodiments and application scenarios thereof with reference to the accompanying drawings.

An embodiment of this application provides a method for determining a validity duration of a reference signal, and as shown in FIG. 2, the method includes the following steps.

Step 101: A terminal obtains first information in an idle state or an inactive state.

Step 102: The terminal determines a target validity duration of a first reference signal based on the first information, or determines, based on second availability indication information, that the first reference signal is unavailable, where the first reference signal includes a tracking reference signal and/or a channel state information reference signal.

The first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

In this embodiment of this application, the terminal in the idle state or the inactive state determines the validity duration of the idle and/or inactive first reference signal based on the first information, and can then monitor the first reference signal during the validity duration of the first reference signal. In this way, the behavior of the terminal can be clarified even if the configuration information of the first reference signal is changed after the terminal receives availability indication information of the first reference signal.

In some embodiments, the determining, by the terminal, a target validity duration of a first reference signal based on the first information includes:
determining, by the terminal, that an ending time of the target validity duration is a first time, where the first time is determined based on an expiration time of a time length of a first validity duration and a second time.

The second time includes any one of the following:
a time unit in which a boundary of a modification period for receiving a system information (SI) message by the terminal is located;
a time unit in which the N-th modification period following a modification period for receiving a first system information message by the terminal is located;
a time unit in which the terminal receives the first system information message, or a system frame number (SFN) of the 1st paging frame (PF) in a default discontinuous reception (DRX) cycle (cycle) for receiving the first system information message by the terminal;
a time unit in which the terminal receives an updated system information block 1, or a system frame number of the 1st paging frame in a default discontinuous reception cycle for receiving the updated system information block 1 by the terminal, where the system information block 1 indicates that the configuration information of the first reference signal is changed;
a system frame number of the 1st paging frame in the M-th discontinuous reception cycle following a default discontinuous reception cycle for receiving the first system information message by the terminal; and
the P-th time unit after a time unit in which the terminal receives the first system information message; where
the first system information message carries updated configuration information of the first reference signal, the time unit includes a system frame number, a subframe, a slot, and a symbol, and M, N, and P are positive integers.

In the foregoing embodiment, the first time is an earlier time of an expiration time of a time length of a first validity duration and a second time; or
the first time is the expiration time of the time length of the first validity duration; or
the first time is the second time.

The first SI message is an SI message of a system information block (SIB) containing the configuration information of the idle and/or inactive first reference signal.

In some embodiments, the configuration information of the first reference signal includes at least one of the following:
a time length of a validity duration of the first reference signal; and
configuration information of an occasion of the first reference signal; where
the configuration information of the occasion of the first reference signal includes at least one resource set of at least one first reference signal, and the resource set includes at least one of the following parameters:
   tracking reference signal resource set identifier TRS-ResourceSetId;
   frequency domain allocation information frequency Domain Allocation;
   the number of slots numofslot;
   starting resource block startingRB;
   the number of resource blocks nrofRBs;
   periodicity and offset periodicity And Offset;
   the first orthogonal frequency division multiplexing symbol in time domain first OFDM Symbol In TimeDomain;
   power control offset SS power Control Offset SS;
   quasi-co-location information, such as SSB-index;
   availability indication identifier indBitID of the first reference signal corresponding to a resource set of the first reference signal; and
   scrambling identifier scrambling ID.

In some embodiments, the determining, by the terminal, a validity duration of the first reference signal based on the second availability indication information includes:
determining, by the terminal, that the first reference signal is unavailable.

For example, in a specific case, the UE ignores received availability indication information of the idle and/or inactive first reference signal. Specifically, the UE still considers that the idle and/or inactive first reference signal is unavailable even after receiving the availability indication information of the idle and/or inactive first reference signal in a specific case.

In some embodiments, the determining, by the terminal, a target validity duration of a first reference signal based on the first information, or determining, based on second availability indication information, that the first reference signal is unavailable further includes:
according to received first indication information, performing the step of determining the target validity duration of the first reference signal, or performing the step of determining, based on the second availability indication information, that the first reference signal is unavailable.

The first indication information indicates the terminal how to determine the validity duration of the first reference signal, for example, when the first indication information is true, it is determined according to the received first indication information that the first reference signal is unavailable; or when the first indication information is false, it is determined according to the received first indication information that a starting time of the validity duration period is a first starting time and an ending time is a first time.

Certainly, alternatively, when the first indication information is false, it may be determined according to the received first indication information that the first reference signal is unavailable; or when the first indication information is true, it is determined according to the received first indication information that the starting time of the validity duration period is the first starting time and the ending time is the first time.

In some embodiments, the system information message includes the configuration information of the first reference signal, and the determining, by the terminal, a target validity duration of a first reference signal based on the first information includes:
determining, by the terminal, a validity duration of the first reference signal based on a change status of the configuration information of the first reference signal.

The change status of the configuration information of the first reference signal includes at least one of the following:
a time length of the validity duration of the first reference signal is changed from the time length of the first validity duration to a time length of a second validity duration;
configuration information of an occasion of the first reference signal is changed; and
a parameter of at least one first reference signal resource set in the occasion of the first reference signal is changed.

In some embodiments, the determining, by the terminal, a validity duration of the first reference signal based on a change status of the configuration information of the first reference signal includes any one of the following:
if a parameter of at least one first reference signal resource set in an occasion of the first reference signal is changed and configuration information of the first reference signal applied by the terminal is not changed, determining that a starting time of the validity duration of the first reference signal is a first starting time and an ending time is a third time;
if a parameter of at least one first reference signal resource set in the occasion of the first reference signal is changed and the configuration information of the first reference signal applied by the terminal is changed, determining that the starting time of the validity duration of the first reference signal is the first starting time and the ending time is the third time; and
if a time length of the validity duration of the first reference signal is changed to a time length of a second validity duration, restarting the validity duration of the first reference signal or applying the time length of the second validity duration; where
the first starting time is a time at which the terminal receives the first availability indication information; and
the third time is any one of the following:
   a first one, being the expiration time of the time length of the first validity duration;
   a second one, being a system frame number of the 1st paging frame in a default discontinuous reception cycle for receiving availability indication information of a next first reference signal by the terminal; and
   the earlier one of the first one and the second one.

In some embodiments, the restarting the validity duration of the first reference signal includes:
the starting time of the validity duration is the second time, and the ending time is an expiration time of the time length of the second validity duration.

In the foregoing embodiment, the applying the time length of the second validity duration includes:
the starting time of the validity duration is the second time, and the ending time is a fifth time; and
the fifth time includes any one of the following:
   a first one, being a system frame number of the 1st paging frame in a default discontinuous reception cycle for receiving availability indication information of a next first reference signal;
   a second one, being a system frame number at which a time length of a first remaining validity duration expires and/or a system frame number of the 1st paging frame in a default discontinuous reception cycle in which the time length of the first remaining validity duration expires; and
   the earlier one of the first one and the second one.

The time length of the first remaining validity duration is the time length of the second validity duration minus a time length of a third validity duration to obtain a time length of a remaining validity duration, and the time length of the third validity duration is a time length between the second time and the first starting time.

In some embodiments, in a case that the ending time is a system frame number at which a time length of a first remaining validity duration expires and/or a system frame number of the 1st paging frame in a default discontinuous reception cycle in which the time length of the first remaining validity duration expires:
if the time length of the remaining validity duration is less than 0, it is determined that the first reference signal becomes invalid from the second time; and
if the time length of the remaining validity duration is not less than 0, the first reference signal is valid within a time range of the remaining validity duration.

In some embodiments, the determining, by the terminal, a target validity duration of a first reference signal based on the second availability indication information includes:
in a case that the second availability indication information indicates that all tracking reference signals and/or channel state information reference signals configured by a network are invalid, determining that an ending time of the target validity duration is any one of the following:
a time unit in which a boundary of a modification period for receiving the second availability indication information by the terminal or a modification period associated with reception of the second availability indication information is located;
an A-th time unit following the modification period for receiving the second availability indication information by the terminal or a modification period associated with reception of the second availability indication information are located;
a time unit in which the terminal receives the second availability indication information, or a system frame number of the 1st paging frame in a default discontinuous reception cycle for receiving the second availability indication information by the terminal; and
a system frame number of the 1st paging frame in a B-th discontinuous reception cycles following a default discontinuous reception cycle for receiving the second availability indication information by the terminal; where
the time unit includes a system frame number, a subframe, a slot, and a symbol, where A and B are positive integers, and all the tracking reference signals and/or channel state information reference signals include the first reference signal.

In some embodiments, the determining, by the terminal, a target validity duration of a first reference signal based on the first availability indication information includes:
in a case that the first availability indication information indicates that resources or resource sets of one or more first reference signals are valid, determining that a starting time of the target validity duration is a sixth time and an ending time is an expiration time of a time length of a first validity duration or a time length of a second remaining validity duration; where the time length of the second remaining validity duration is equal to the time length of the first validity duration minus T, T is a time length between the sixth time and a time at which the terminal receives the first availability indication information, and the sixth time is a time at which the terminal receives the second availability indication information.

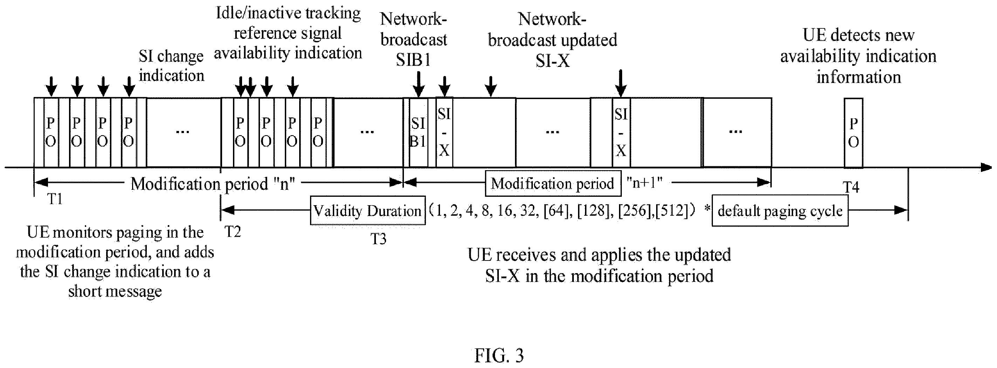

In a specific embodiment, the validity duration of the idle and/or inactive first reference signal ends at a system frame number in which a boundary of the modification period (modification period) is located. As shown in FIG. 3, this embodiment includes the following steps:
Step 1: At time T1, UE receives paging PDCCH, which carries system information change (SI change) indication information.
Step 2: At time T2, the UE receives paging PDCCH, which carries availability indication information of the idle and/or inactive first reference signal.
Step 3: The UE determines a validity duration according to the availability indication information of the idle and/or inactive first reference signal, where a starting time is an SFN of the 1st PF in a default DRX cycle to which time T2 belongs, and a time length is a length of a validity duration configured in current system information.
Step 4: The UE monitors, during the validity duration, the idle and/or inactive first reference signal according to configuration information of the idle and/or inactive first reference signal.
Step 5: The UE receives, at time T3, an updated SIB-X, which carries updated configuration information of the idle and/or inactive first reference signal.
Step 6: The UE considers that the idle and/or inactive first reference signal is no longer available from an SFN of a boundary of a modification period to which time T3 belongs.
Step 7: The UE receives availability indication information of an idle and/or inactive tracking reference signal at time T4, and the UE determines the validity duration of the idle and/or inactive first reference signal: the UE considers a starting time to be an SFN of the 1st PF in a default DRX cycle to which time T4 belongs, and a time length is a length of a validity duration configured in current system information at time T4.
Step 8: The UE monitors, during the validity duration, the idle and/or inactive first reference signal according to the updated configuration information that is of the idle and/or inactive first reference signal and that is received at time T3.

In another specific embodiment, the terminal ignores the availability indication information of the idle and/or inactive first reference signal. This embodiment includes the following steps.

Step 1: At time T1, UE receives paging PDCCH, which carries SI change indication information.

Step 2: At time T2, the UE receives paging PDCCH, which carries availability indication information of the idle and/or inactive first reference signal.

Step 3: The UE ignores the received availability indication information of the idle and/or inactive first reference signal, that is, the UE still considers the idle and/or inactive first reference signal to be invalid.

In still another specific embodiment, the UE determines availability of the idle and/or inactive first reference signal according to first indication information. If the first indication information is set to true, it means that in a case that the UE receives the availability indication information of the idle and/or inactive first reference signal in a modification period for receiving system information change indication information, the UE ignores the availability indication information. If the first indication information is set to false, it means that the UE detects that the configuration information of the idle and/or inactive first reference signal is changed within the validity duration, and the idle and/or inactive first reference signal is not available until the SFN of a boundary of a modification period in which new configuration information is received. This embodiment includes the following steps:
Step 1: The UE receives the first indication information, which is set to true.
Step 2: At time T1, the UE receives paging PDCCH, which carries system information change indication information.
Step 3: At time T2, the UE receives paging PDCCH, which carries availability indication information of the idle and/or inactive first reference signal.
Step 4: The UE ignores the received availability indication information of the idle and/or inactive first reference signal, that is, the UE still considers the idle and/or inactive first reference signal to be invalid.

In still another specific embodiment, the configuration information that is of an occasion (occasion(s)) of the idle and/or inactive first reference signal and that is applied by the UE has not been changed. This embodiment includes the following steps.

Step 1: At time T1, UE receives paging PDCCH, which carries SI change indication information.

Step 2: At time T2, the UE receives paging PDCCH, which carries availability indication information of the idle and/or inactive first reference signal.

Step 3: The UE determines a validity duration according to the availability indication information of the idle and/or inactive first reference signal, where a starting time is an SFN of the 1st PF in a default DRX cycle to which time T2 belongs, and a time length is a length of a validity duration configured in current system information.

Step 4: The UE monitors, during the validity duration, the idle and/or inactive first reference signal according to configuration information of the idle and/or inactive first reference signal.

Step 5: The UE receives, at time T3, an updated SIB-X, which carries updated configuration information of the idle and/or inactive first reference signal. The UE detects that the configuration information of the idle and/or inactive first reference signal applied by itself has not been changed.

Step 6: The UE considers that the idle and/or inactive first reference signal remains valid until the earlier time of the following two, C and D:
C: before availability indication information of a next idle and/or inactive first reference signal is received; and
D: before the validity duration of the idle and/or inactive first reference signal expires.

Step 7: If the UE receives the availability indication information of the idle and/or inactive first reference signal, the UE determines, according to the availability indication information, availability of the idle and/or inactive first reference signal following an SFN of the 1st PF in a default DRX cycle of the indication information.

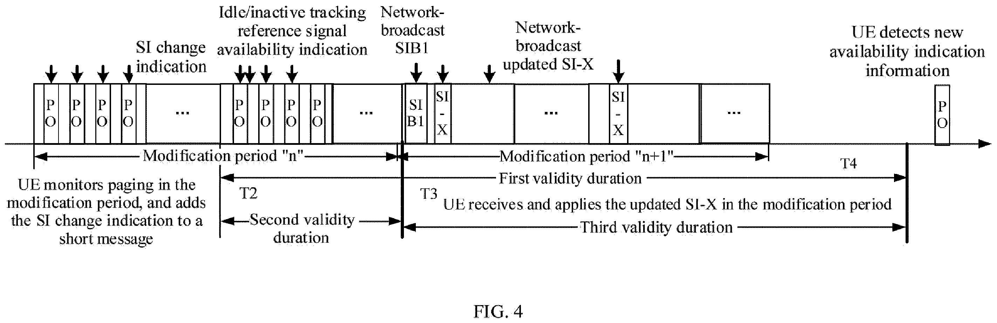

In still another specific embodiment, the configuration information that is of an occasion(s) of the idle and/or inactive first reference signal and that is applied by the UE is changed. As shown in FIG. 4, this embodiment includes the following steps.

Step 1: At time T1, UE receives paging PDCCH, which carries SI change indication information.

Step 2: At time T2, the UE receives paging PDCCH, which carries availability indication information of the idle and/or inactive first reference signal.

Step 3: The UE determines a validity duration according to the availability indication information of the idle and/or inactive first reference signal, where a starting time is an SFN of the 1st PF in a default DRX cycle to which time T2 belongs, and a time length is a length of a validity duration configured in current system information.

Step 4: The UE monitors, during the validity duration, the idle and/or inactive first reference signal according to configuration information of the idle and/or inactive first reference signal.

Step 5: The UE receives, at time T3, an updated SIB-X, which carries updated configuration information of the idle and/or inactive first reference signal. The UE detects that the configuration information of the idle and/or inactive first reference signal applied by itself has changed.

Step 6: The terminal determines the following second validity duration and third validity duration, where the second validity duration starts from an SFN of the 1st PF in a default DRX cycle for receiving the availability indication information of the idle and/or inactive first reference signal by the UE, and ends at an SFN of a boundary of a modification period for receiving the updated system information by the UE. The third validity duration starts from the SFN of the boundary of the modification period for receiving the updated system information by the UE, and ends at the earlier time of a time of receiving availability indication information of a new idle and/or inactive first reference signal by the UE and an expiration time of the time length of the first validity duration, as shown in FIG. 4.

Step 7: The UE applies configuration information of a first TRS/CSI-RS (that is, configuration information before change) within the second validity duration; and applies configuration information of a second TRS/CSI-RS (that is, configuration information after change) within the third validity duration.

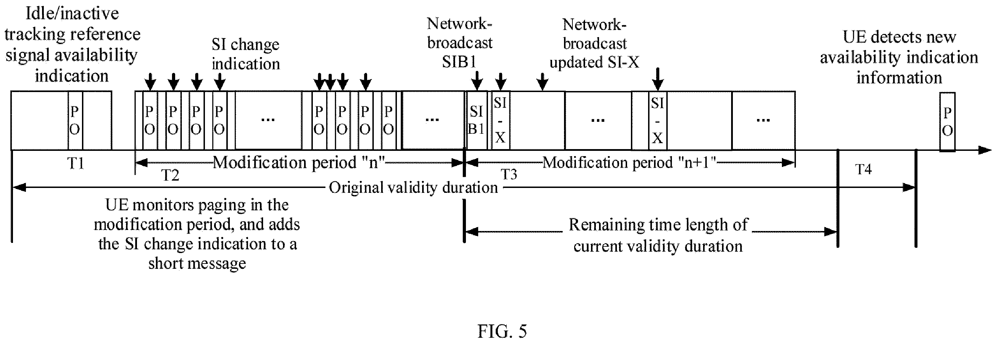

In still another specific embodiment, a validity duration of the idle and/or inactive first reference signal applied by the UE is updated. As shown in FIG. 5, this embodiment includes the following steps.

Step 1: The UE receives the availability indication information of the idle and/or inactive first reference signal at T1.

Step 2: The UE determines a length of a validity duration, such as an "original validity duration" shown in FIG. 5. That is, starting from an SFN of the 1st PF in a default DRX cycle to which T1 belongs, the UE uses a length of a validity duration configured by the network side as the length.

Step 3: The UE receives SI change indication information at time T2.

Step 4: The UE receives updated SI at time T3, which carries an updated length of the validity duration.

Step 5: The UE uses an SFN of a boundary of a modification period to which time T3 belongs as a starting point and uses the updated length of the validity duration as a length of a remaining validity duration to determine a "current length of the validity duration".

Step 6: The UE considers the idle and/or inactive first reference signal to be valid in the current length of the validity duration.

The method for determining a validity duration of a reference signal provided in the embodiments of this application can be executed by an apparatus for determining a validity duration of a reference signal. In the embodiments of this application, the method for determining a validity duration of a reference signal being performed by the apparatus for determining a validity duration of a reference signal is used as an example to describe the apparatus for determining a validity duration of a reference signal provided in the embodiments of this application.

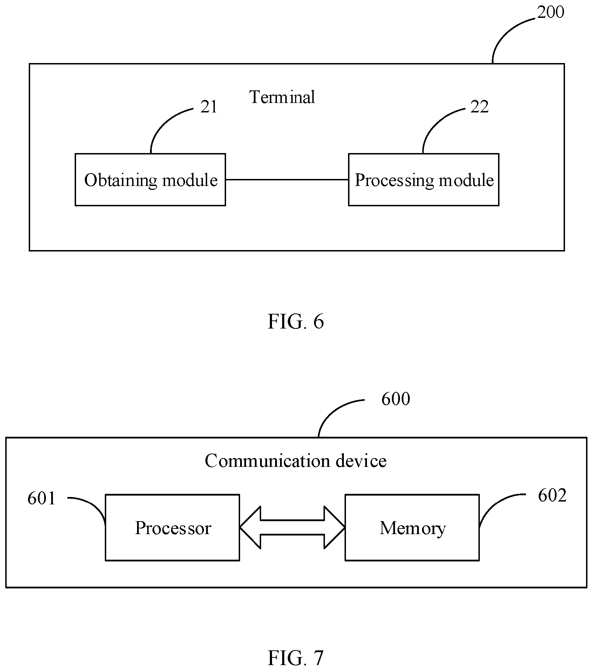

An embodiment of this application provides an apparatus for determining a validity duration of a reference signal, applied to a terminal 200 and as shown in FIG. 6, including:
an obtaining module 21, configured to obtain first information in an idle state or an inactive state; and
a processing module 22, configured to determine a target validity duration of a first reference signal based on the first information, or determine, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

In this embodiment of this application, the terminal in the idle state or the inactive state determines the validity duration of the idle and/or inactive first reference signal based on the first information, and can then monitor the first reference signal during the validity duration of the first reference signal. In this way, the behavior of the terminal can be clarified even if the configuration information of the first reference signal is changed after the terminal receives availability indication information of the first reference signal.

In some embodiments, the processing module 22 is configured to determine that an ending time of the target validity duration is a first time, where the first time is determined based on an expiration time of a time length of a first validity duration and a second time.

The second time includes any one of the following:
a time unit in which a boundary of a modification period for receiving a system information message by the terminal is located;
a time unit in which the N-th modification period following a modification period for receiving a first system information message by the terminal is located;
a time unit in which the terminal receives the first system information message, or a system frame number of the 1st paging frame in a default discontinuous reception cycle for receiving the first system information message by the terminal;
a time unit in which the terminal receives an updated system information block 1, or a system frame number of the 1st paging frame in a default discontinuous reception cycle for receiving the updated system information block 1 by the terminal, where the system information block 1 indicates that the configuration information of the first reference signal is changed;
a system frame number of the 1st paging frame in the M-th discontinuous reception cycle following a default discontinuous reception cycle for receiving the first system information message by the terminal; and
the P-th time unit after a time unit in which the terminal receives the first system information message; where
the first system information message carries updated configuration information of the first reference signal, the time unit includes a system frame number, a subframe, a slot, and a symbol, and M, N, and P are positive integers.

In some embodiments, the first time is an earlier time of an expiration time of a time length of a first validity duration and a second time; or
the first time is the expiration time of the time length of the first validity duration; or
the first time is the second time.

In some embodiments, the system information message includes the configuration information of the first reference signal, and the processing module 22 is configured to determine a validity duration of the first reference signal based on a change status of the configuration information of the first reference signal.

In some embodiments, the change status of the configuration information of the first reference signal includes at least one of the following:
a time length of the validity duration of the first reference signal is changed from the time length of the first validity duration to a time length of a second validity duration;
configuration information of an occasion of the first reference signal is changed; and
a parameter of at least one first reference signal resource set in the occasion of the first reference signal is changed.

In some embodiments, the processing module 22 is configured to perform any one of the following:
if a parameter of at least one first reference signal resource set in an occasion of the first reference signal is changed and configuration information of the first reference signal applied by the terminal is not changed, determining that a starting time of the validity duration of the first reference signal is a first starting time and an ending time is a third time;
if a parameter of at least one first reference signal resource set in the occasion of the first reference signal is changed and the configuration information of the first reference signal applied by the terminal is changed, determining that the starting time of the validity duration of the first reference signal is the first starting time and the ending time is the third time; and
if a time length of the validity duration of the first reference signal is changed to a time length of a second validity duration, restarting the validity duration of the first reference signal or applying the time length of the second validity duration; where
the first starting time is a time at which the terminal receives the first availability indication information; and
the third time is any one of the following:
   a first one, being the expiration time of the time length of the first validity duration;
   a second one, being a system frame number of the 1st paging frame in a default discontinuous reception cycle for receiving availability indication information of a next first reference signal by the terminal; and
   the earlier one of the first one and the second one.

In some embodiments, the starting time of the validity duration is the second time, and the ending time is an expiration time of the time length of the second validity duration.

In some embodiments, the starting time of the validity duration is the second time, and the ending time is a fifth time; and
the fifth time includes any one of the following:
a first one, being a system frame number of the 1st paging frame in a default discontinuous reception cycle for receiving availability indication information of a next first reference signal;
a second one, being a system frame number at which a time length of a first remaining validity duration expires and/or a system frame number of the 1st paging frame in a default discontinuous reception cycle in which the time length of the first remaining validity duration expires; and
the earlier one of the first one and the second one; where
the time length of the first remaining validity duration is the time length of the second validity duration minus a time length of a third validity duration to obtain a time length of a remaining validity duration, and the time length of the third validity duration is a time length between the second time and the first starting time.

In some embodiments, in a case that the ending time is a system frame number at which a time length of a first remaining validity duration expires and/or a system frame number of the 1st paging frame in a default discontinuous reception cycle in which the time length of the first remaining validity duration expires:
if the time length of the remaining validity duration is less than 0, it is determined that the first reference signal becomes invalid from the second time; and
if the time length of the remaining validity duration is not less than 0, the first reference signal is valid within a time range of the remaining validity duration.

In some embodiments, the processing module 22 is configured to perform any one of the following:
a time unit in which a boundary of a modification period for receiving the second availability indication information or a modification period associated with reception of the second availability indication information is located;
a time unit in which A modification periods following the modification period for receiving the second availability indication information or a modification period associated with reception of the second availability indication information are located;
a time unit in which the terminal receives the second availability indication information, or a system frame number of the 1st paging frame in a default discontinuous reception cycle for receiving the second availability indication information; and
a system frame number of the 1st paging frame in B discontinuous reception cycles following a default discontinuous reception cycle for receiving the second availability indication information; where
the time unit includes a system frame number, a subframe, a slot, and a symbol, where A and B are positive integers, and all the tracking reference signals and/or channel state information reference signals include the first reference signal.

In some embodiments, the processing module 22 is configured to: in a case that the first availability indication information indicates that resources or resource sets of one or more first reference signals are valid, determine that a starting time of the target validity duration is a sixth time and an ending time is an expiration time of a time length of a first validity duration or a time length of a second remaining validity duration; where the time length of the second remaining validity duration is equal to the time length of the first validity duration minus T, T is a time length between the sixth time and a time at which the terminal receives the first availability indication information, and the sixth time is a time at which the terminal receives the second availability indication information.

In some embodiments, the processing module 22 is configured to: according to received first indication information, perform the step of determining the target validity duration of the first reference signal, or perform the step of determining, based on the second availability indication information, that the first reference signal is unavailable.

The apparatus for determining validity duration of reference signal in the embodiments of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The apparatus for determining validity duration of reference signal provided in this embodiment of this application can implement the processes implemented in the method embodiment in FIG. 2 to FIG. 5, with the same technical effects achieved. To avoid repetition, details are not described herein again.

Optionally, as shown in FIG. 7, an embodiment of this application further provides a communication device 600, including a processor 601, a memory 602, and a program or instructions stored in the memory 602 and capable of running on the processor 601. For example, when the communication device 600 is a terminal and when the program or instructions are executed by the processor 601, the steps of the foregoing embodiments of the method for determining a validity duration of a reference signal are implemented, with the same technical effects achieved.

An embodiment of this application further provides a terminal. The terminal includes a processor and a memory, and the memory has stored thereon a program or instructions capable of running on the processor. When the program or instructions are executed by the processor, the steps of the method for determining a validity duration of a reference signal are implemented.

An embodiment of this application further provides a terminal, including a processor and a communication interface, where the processor is configured to obtain first information in an idle state or an inactive state; and determine a target validity duration of a first reference signal based on the first information, or determine, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

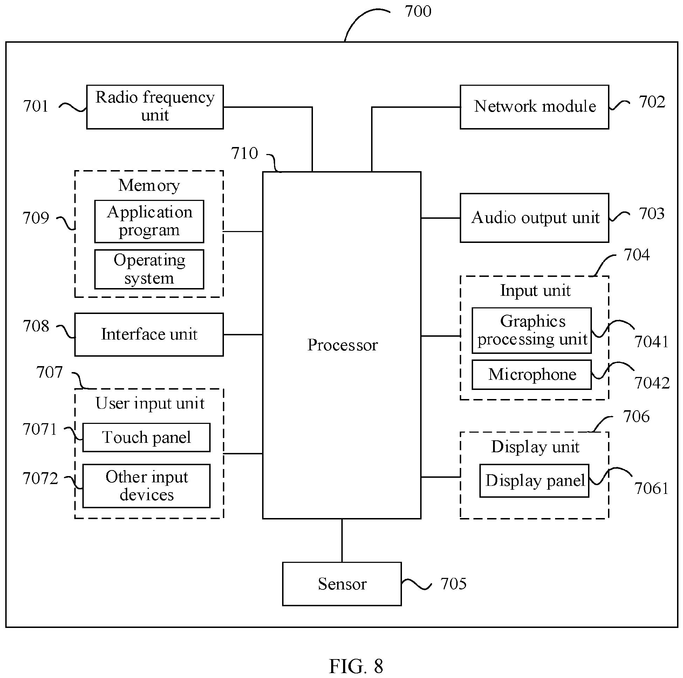

An embodiment of this application further provides a terminal, including a processor and a communication interface. The terminal embodiment corresponds to the foregoing terminal-side method embodiment, and each implementation process and implementation of the foregoing method embodiments can be applied to the terminal embodiment, with the same technical effect achieved. Specifically, FIG. 8 is a schematic diagram of a hardware structure of a terminal for implementing the embodiments of this application.

The terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 8 does not constitute any limitation on the terminal. The terminal may include more or fewer components than those shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. This application processor primarily processes operations involving an operating system, user interfaces, application programs, and the like. The modem processor primarily processes radio communication signals, for example, being a baseband processor. It can be understood that the modem processor may alternatively be not integrated in the processor 710.

In some embodiments, the processor 710 is configured to obtain first information in an idle state or an inactive state; and determine a target validity duration of a first reference signal based on the first information, or determine, based on second availability indication information, that the first reference signal is unavailable, where the first reference signal includes a tracking reference signal and/or a channel state information reference signal; where
the first information includes at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

In some embodiments, the processor 710 is configured to determine that an ending time of the target validity duration is a first time, where the first time is determined based on an expiration time of a time length of a first validity duration and a second time.

The second time includes any one of the following:
a time unit in which a boundary of a modification period for receiving a system information message by the terminal is located;
a time unit in which the N-th modification period following a modification period for receiving a first system information message by the terminal is located;
a time unit in which the terminal receives the first system information message, or a system frame number of the 1st paging frame in a default discontinuous reception cycle for receiving the first system information message by the terminal;
a time unit in which the terminal receives an updated system information block 1, or a system frame number of the 1st paging frame in a default discontinuous reception cycle for receiving the updated system information block 1 by the terminal, where the system information block 1 indicates that the configuration information of the first reference signal is changed;
a system frame number of the 1st paging frame in the M-th discontinuous reception cycle following a default discontinuous reception cycle for receiving the first system information message by the terminal; and
the P-th time unit after a time unit in which the terminal receives the first system information message; where
the first system information message carries updated configuration information of the first reference signal, the time unit includes a system frame number, a subframe, a slot, and a symbol, and M, N, and P are positive integers.

In some embodiments, the first time is an earlier time of an expiration time of a time length of a first validity duration and a second time; or
the first time is the expiration time of the time length of the first validity duration; or
the first time is the second time.

In some embodiments, the system information message includes the configuration information of the first reference signal, and the processor 710 is configured to determine a validity duration of the first reference signal based on a change status of the configuration information of the first reference signal.

In some embodiments, the change status of the configuration information of the first reference signal includes at least one of the following:
a time length of the validity duration of the first reference signal is changed from the time length of the first validity duration to a time length of a second validity duration;
configuration information of an occasion of the first reference signal is changed; and
a parameter of at least one first reference signal resource set in the occasion of the first reference signal is changed.

In some embodiments, the processor 710 is configured to perform any one of the following:
if a parameter of at least one first reference signal resource set in an occasion of the first reference signal is changed and configuration information of the first reference signal applied by the terminal is not changed, determining that a starting time of the validity duration of the first reference signal is a first starting time and an ending time is a third time;
if a parameter of at least one first reference signal resource set in the occasion of the first reference signal is changed and the configuration information of the first reference signal applied by the terminal is changed, determining that the starting time of the validity duration of the first reference signal is the first starting time and the ending time is the third time; and
if a time length of the validity duration of the first reference signal is changed to a time length of a second validity duration, restarting the validity duration of the first reference signal or applying the time length of the second validity duration; where
the first starting time is a time at which the terminal receives the first availability indication information; and
the third time is any one of the following:
   a first one, being the expiration time of the time length of the first validity duration;
   a second one, being a system frame number of the 1st paging frame in a default discontinuous reception cycle for receiving availability indication information of a next first reference signal by the terminal; and
   the earlier one of the first one and the second one.

In some embodiments, the starting time of the validity duration is the second time, and the ending time is an expiration time of the time length of the second validity duration.

In some embodiments, the starting time of the validity duration is the second time, and the ending time is a fifth time; and
the fifth time includes any one of the following:
a first one, being a system frame number of the 1st paging frame in a default discontinuous reception cycle for receiving availability indication information of a next first reference signal;
a second one, being a system frame number at which a time length of a first remaining validity duration expires and/or a system frame number of the 1st paging frame in a default discontinuous reception cycle in which the time length of the first remaining validity duration expires; and
the earlier one of the first one and the second one; where
the time length of the first remaining validity duration is the time length of the second validity duration minus a time length of a third validity duration to obtain a time length of a remaining validity duration, and the time length of the third validity duration is a time length between the second time and the first starting time.

In some embodiments, in a case that the ending time is a system frame number at which a time length of a first remaining validity duration expires and/or a system frame number of the 1st paging frame in a default discontinuous reception cycle in which the time length of the first remaining validity duration expires:
if the time length of the remaining validity duration is less than 0, it is determined that the first reference signal becomes invalid from the second time; and
if the time length of the remaining validity duration is not less than 0, the first reference signal is valid within a time range of the remaining validity duration.

In some embodiments, the processor 710 is configured to perform any one of the following:
a time unit in which a boundary of a modification period for receiving the second availability indication information or a modification period associated with reception of the second availability indication information is located;
a time unit in which A modification periods following the modification period for receiving the second availability indication information or a modification period associated with reception of the second availability indication information are located;
a time unit in which the terminal receives the second availability indication information, or a system frame number of the 1st paging frame in a default discontinuous reception cycle for receiving the second availability indication information; and
a system frame number of the 1st paging frame in B discontinuous reception cycles following a default discontinuous reception cycle for receiving the second availability indication information; where
the time unit includes a system frame number, a subframe, a slot, and a symbol, where A and B are positive integers, and all the tracking reference signals and/or channel state information reference signals include the first reference signal.

In some embodiments, the processor 710 is configured to: in a case that the first availability indication information indicates that resources or resource sets of one or more first reference signals are valid, determine that a starting time of the target validity duration is a sixth time and an ending time is an expiration time of a time length of a first validity duration or a time length of a second remaining validity duration; where the time length of the second remaining validity duration is equal to the time length of the first validity duration minus T, T is a time length between the sixth time and a time at which the terminal receives the first availability indication information, and the sixth time is a time at which the terminal receives the second availability indication information.

In some embodiments, the processor 710 is configured to: according to received first indication information, perform the step of determining the target validity duration of the first reference signal, or perform the step of determining, based on the second availability indication information, that the first reference signal is unavailable.

An embodiment of this application further provides a readable storage medium, where a program or instructions are stored in the readable storage medium. When the program or instructions are executed by a processor, the processes of the foregoing embodiments of the method for determining a validity duration of a reference signal described above can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiment of the method for determining a validity duration of a reference signal, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application provides a computer program product, where the computer program product is stored in a non-transient storage medium, and when being executed by at least one processor, the computer program product is configured to implement the processes of the foregoing embodiments of the method for determining a validity duration of a reference signal, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A method for determining a validity duration of a reference signal, comprising:
obtaining, by a terminal, first information in an idle state or an inactive state; and
determining, by the terminal, a target validity duration of a first reference signal based on the first information, or determining, based on second availability indication information, that the first reference signal is unavailable, wherein the first reference signal comprises a tracking reference signal and/or a channel state information reference signal; wherein
the first information comprises at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

2. The method according to claim 1, wherein the determining, by the terminal, a target validity duration of a first reference signal based on the first information comprises:
determining, by the terminal, that an ending time of the target validity duration is a first time.

3. The method according to claim 2, wherein the first time is determined based on an expiration time of a time length of a first validity duration and a second time.

4. The method according to claim 2, wherein
the first time is an earlier time of an expiration time of a time length of a first validity duration and a second time; or
the first time is the expiration time of the time length of the first validity duration; or
the first time is the second time.

5. The method according to claim 3 or 4, wherein
the second time comprises any one of the following:
a time unit in which a boundary of a modification period for receiving a system information message by the terminal is located;
a time unit in which the N-th modification period following a modification period for receiving a first system information message by the terminal is located;
a time unit in which the terminal receives the first system information message, or a system frame number of the 1st paging frame in a default discontinuous reception cycle for receiving the first system information message by the terminal;
a time unit in which the terminal receives an updated system information block 1, or a system frame number of the 1st paging frame in a default discontinuous reception cycle for receiving the updated system information block 1 by the terminal, wherein the system information block 1 indicates that the configuration information of the first reference signal is changed;
a system frame number of the 1st paging frame in the M-th discontinuous reception cycle following a default discontinuous reception cycle for receiving the first system information message by the terminal; and
the P-th time unit after a time unit in which the terminal receives the first system information message; wherein
the first system information message carries updated configuration information of the first reference signal, the time unit comprises a system frame number, a subframe, a slot, and a symbol, and M, N, and P are positive integers.

6. The method according to claim 5, wherein the system information message comprises the configuration information of the first reference signal, and the determining, by the terminal, a target validity duration of a first reference signal based on the first information comprises:
determining, by the terminal, a validity duration of the first reference signal based on a change status of the configuration information of the first reference signal.

7. The method according to claim 6, wherein the change status of the configuration information of the first reference signal comprises at least one of the following:
a time length of the validity duration of the first reference signal is changed from the time length of the first validity duration to a time length of a second validity duration;
configuration information of an occasion of the first reference signal is changed; and
a parameter of at least one first reference signal resource set in the occasion of the first reference signal is changed.

8. The method according to claim 6, wherein the determining, by the terminal, a validity duration of the first reference signal based on a change status of the configuration information of the first reference signal comprises any one of the following:
if a parameter of at least one first reference signal resource set in an occasion of the first reference signal is changed and configuration information of the first reference signal applied by the terminal is not changed, determining that a starting time of the validity duration of the first reference signal is a first starting time and an ending time is a third time;
if a parameter of at least one first reference signal resource set in the occasion of the first reference signal is changed and the configuration information of the first reference signal applied by the terminal is changed, determining that the starting time of the validity duration of the first reference signal is the first starting time and the ending time is the third time; and
if a time length of the validity duration of the first reference signal is changed to a time length of a second validity duration, restarting the validity duration of the first reference signal or applying the time length of the second validity duration; wherein
the first starting time is a time at which the terminal receives the first availability indication information; and
the third time is any one of the following:
a first one, being the expiration time of the time length of the first validity duration;
a second one, being a system frame number of the 1st paging frame in a default discontinuous reception cycle for receiving availability indication information of a next first reference signal by the terminal; and
the earlier one of the first one and the second one.

9. The method according to claim 8, wherein the restarting the validity duration of the first reference signal comprises:
the starting time of the validity duration is the second time, and the ending time is an expiration time of the time length of the second validity duration.

10. The method according to claim 8, wherein the applying the time length of the second validity duration comprises:
the starting time of the validity duration is the second time, and the ending time is a fifth time; and
the fifth time comprises any one of the following:
a first one, being a system frame number of the 1st paging frame in a default discontinuous reception cycle for receiving availability indication information of a next first reference signal;
a second one, being a system frame number at which a time length of a first remaining validity duration expires and/or a system frame number of the 1st paging frame in a default discontinuous reception cycle in which the time length of the first remaining validity duration expires; and
the earlier one of the first one and the second one; wherein
the time length of the first remaining validity duration is the time length of the second validity duration minus a time length of a third validity duration to obtain a time length of a remaining validity duration, and the time length of the third validity duration is a time length between the second time and the first starting time.

11. The method according to claim 10, wherein if the ending time is a system frame number at which the time length of the first remaining validity duration expires and/or a system frame number of the 1st paging frame in the default discontinuous reception cycle in which the time length of the first remaining validity duration expires:
if the time length of the remaining validity duration is less than 0, it is determined that the first reference signal becomes invalid from the second time; and
if the time length of the remaining validity duration is not less than 0, the first reference signal is valid within a time range of the remaining validity duration.

12. The method according to claim 1, wherein the determining, by the terminal, a target validity duration of a first reference signal based on the second availability indication information comprises:
in a case that the second availability indication information indicates that all tracking reference signals and/or channel state information reference signals configured by a network are invalid, determining that an ending time of the target validity duration is any one of the following:
a time unit in which a boundary of a modification period for receiving the second availability indication information by the terminal or a modification period associated with reception of the second availability indication information is located;
an A-th time unit following the modification period for receiving the second availability indication information by the terminal or a modification period associated with reception of the second availability indication information are located;
a time unit in which the terminal receives the second availability indication information, or a system frame number of the 1st paging frame in a default discontinuous reception cycle for receiving the second availability indication information by the terminal; and
a system frame number of the 1st paging frame in a B-th discontinuous reception cycles following a default discontinuous reception cycle for receiving the second availability indication information by the terminal; wherein
the time unit comprises a system frame number, a subframe, a slot, and a symbol, wherein A and B are positive integers, and all the tracking reference signals and/or channel state information reference signals comprise the first reference signal.

13. The method according to claim 1, wherein the determining, by the terminal, a target validity duration of a first reference signal based on the first availability indication information comprises:
in a case that the first availability indication information indicates that resources or resource sets of one or more first reference signals are valid, determining that a starting time of the target validity duration is a sixth time and an ending time is an expiration time of a time length of a first validity duration or a time length of a second remaining validity duration; wherein the time length of the second remaining validity duration is equal to the time length of the first validity duration minus T, T is a time length between the sixth time and a time at which the terminal receives the first availability indication information, and the sixth time is a time at which the terminal receives the second availability indication information.

14. The method according to claim 1, wherein the determining, by the terminal, a target validity duration of a first reference signal based on the first information, or determining, based on second availability indication information, that the first reference signal is unavailable further comprises:
according to received first indication information, performing the step of determining the target validity duration of the first reference signal, or performing the step of determining, based on the second availability indication information, that the first reference signal is unavailable.

15. An apparatus for determining a validity duration of a reference signal, comprising:
an obtaining module, configured to obtain first information in an idle state or an inactive state; and
a processing module, configured to determine a target validity duration of a first reference signal based on the first information, or determine, based on second availability indication information, that the first reference signal is unavailable, wherein the first reference signal comprises a tracking reference signal and/or a channel state information reference signal; wherein
the first information comprises at least one of the following: a system information message, first availability indication information, and second availability indication information; and
the first availability indication information is availability indication information of the first reference signal in a downlink control message, and the second availability indication information is availability indication information that is of the first reference signal and that is received during a modification period for receiving system information change indication information containing configuration information of the first reference signal.

16. The apparatus for determining a validity duration of a reference signal according to claim 15, wherein
the processing module is specifically configured to determine that an ending time of the target validity duration is a first time.

17. The apparatus for determining a validity duration of a reference signal according to claim 16, wherein the first time is determined based on an expiration time of a time length of a first validity duration and a second time.

18. The apparatus for determining a validity duration of a reference signal according to claim 16, wherein
the first time is an earlier time of an expiration time of a time length of a first validity duration and a second time; or
the first time is the expiration time of the time length of the first validity duration; or
the first time is the second time.

19. The apparatus for determining a validity duration of a reference signal according to claim 17 or 18, wherein
the second time comprises any one of the following:
a time unit in which a boundary of a modification period for receiving a system information message by the terminal is located;
a time unit in which the N-th modification period following a modification period for receiving a first system information message by the terminal is located;
a time unit in which the terminal receives the first system information message, or a system frame number of the 1st paging frame in a default discontinuous reception cycle for receiving the first system information message by the terminal;
a time unit in which the terminal receives an updated system information block 1, or a system frame number of the 1st paging frame in a default discontinuous reception cycle for receiving the updated system information block 1 by the terminal, wherein the system information block 1 indicates that the configuration information of the first reference signal is changed;
a system frame number of the 1st paging frame in the M-th discontinuous reception cycle following a default discontinuous reception cycle for receiving the first system information message by the terminal; and
the P-th time unit after a time unit in which the terminal receives the first system information message; wherein
the first system information message carries updated configuration information of the first reference signal, the time unit comprises a system frame number, a subframe, a slot, and a symbol, and M, N, and P are positive integers.

20. A terminal, comprising a processor and a memory, wherein the memory has stored thereon a program or instructions capable of running on the processor, and the program or instruction are executed by the processor to implement the steps of the method for determining a validity duration of a reference signal according to any one of claims 1 to 14.

21. A readable storage medium, wherein the readable storage medium has stored a program or instructions thereon, and when the program or instructions are executed by a processor, the steps of the method for determining a validity duration of a reference signal according to any one of claims 1 to 14 are implemented.

22. A chip, comprising a processor and a communication interface, wherein the communication interface is coupled to the processor, and the processor is configured to execute a program or instructions to implement the steps of the method for determining a validity duration of a reference signal according to any one of claims 1 to 14.

23. A computer program product, wherein the computer program product is stored in a non-transient storage medium, and the computer program product is executed by at least one processor to implement the steps of the method for determining a validity duration of a reference signal according to any one of claims 1 to 14.
